Europäisches Patentamt

European Patent Office

Office européen des brevets

(19)

(11) Publication number: **0 182 639**
A2

(12) # EUROPEAN PATENT APPLICATION

(21) Application number: **85308366.5**

(22) Date of filing: **18.11.85**

(51) Int. Cl.⁴: **G 02 F 1/13**, G 02 F 1/137, H 01 J 29/89

(30) Priority: **19.11.84 US 672639**

(43) Date of publication of application: **28.05.86** Bulletin 86/22

(84) Designated Contracting States: **DE FR GB IT NL**

(71) Applicant: **TEKTRONIX, INC., Tektronix Industrial Park D/S Y3-121 4900 S.W. Griffith Drive P.O. Box 500, Beaverton Oregon 97077 (US)**

(72) Inventor: **Hubbard, Robert L., 14370 S W Hart, Beaverton Oregon 97005 (US)**

(74) Representative: **Lawrence, Malcolm Graham et al, Malcolm Lawrence & Co. 9th Floor Terminus House Terminus Street, Harlow Essex CM20 1XF (GB)**

(54) Optical filter having variable transmission characteristics.

(57) An optical filter having variable transmission characteristics and application therefor. An optical filter is constructed of a nematic liquid crystal cell wherein the liquid crystal material is linearly aligned and molecules of a dichroic or pleochroic dye are absorbed therein. A voltage selected from within a predetermined range is applied to the cell electrodes to select a predetermined contrast characteristic from within a corresponding continuous range. The filter is placed in front of a display device to control the light emitted therefrom. Two or more such filters are stacked with different alignment directions so as to increase the contrast range. A quarter wave plate is placed in back of the filter to produce a variable circular polarizer. A quarter wave plate is placed between the filter and the display screen to reduce glare by producing attenuation of external light as it impinges on and is reflected back through the filter.

-1-

# OPTICAL FILTER HAVING VARIABLE
# TRANSMISSION CHARACTERISTICS

## BACKGROUND OF THE INVENTION

This invention relates to optical filters, particularly to liquid crystal optical filters whose transmission characteristics can be varied over a continuous range by the selected application of a voltage.

In the use of electronic display devices it is often desirable to provide some means for controlling the intensity of the light emitted from the display that reaches the viewer. This is ordinarily accomplished by modulating the intensity of light produced by the display device itself. However, intensity modulation of the display may require significant additional display circuitry to provide a wide range of intensity variation, it may not provide adequate contrast between light and dark regions of the display, and it may not be available for some types of displays whose intensity is modulated in an essentially binary, that is, on-off, manner. In addition, intensity modulation of the display device itself will not affect the amount of glare that is reflected off the face of the display, which is sometimes a serious problem in observing such displays.

The need for varying the contrast between light and dark regions of a display is particularly acute in the use of cathode ray tube ("CRT") displays in aircraft where very little light is needed or desirable during nighttime flying, while a very bright display that produces little glare is needed during daytime flying above the clouds, where the sunlight is very intense.

Variable intensity reflective displays employing liquid crystal cells have previously been constructed. It is known, for example, that alphanumeric liquid crystal displays marketed as part of

-2-

small computers by companies doing business as Radio Shack and Epson can be varied electrically so that the contrast between the alphanumeric characters and their background can be changed by the adjustment of a potentiometer. Such displays are of the reflective type, that is, the light strikes the display and is reflected back to the viewer except where the character shapes appear. It is believed that such displays operate by use of a twisted nematic liquid crystal cell so as to control the direction of polarization of light transmitted through the display at selected regions corresponding to the character shapes. By varying the voltage applied to the cell the polarization of light leaving the cell can be changed relative to its polarization entering the cell. If the cell is sandwiched between polarizer and analyzer elements and disposed adjacent a reflective background, then a change in polarization of light as it passes through a region of the cell will produce a corresponding change in the intensity of light reflected back to the viewer in that region. An optical filter operating on a similar principal is described in Ehrenhaft U.S. Patent 4,095,099.

It has been observed that adjustment of the intensity of such displays affects the usable viewing angle of the display. Also, it is known that in twisted nematic cells the amount of polarization at any given voltage varies significantly with ambient temperature, and that polarization only varies within a relatively narrow range of voltage, e.g., a range of about 1 volt, whose position changes with ambient temperature. In addition, in some twisted nematic cells the repeatability of a given polarization is poor because of the existence of hysteresis in the relationship between polarization and voltage.

It is also known that liquid crystal cells may be constructed employing a nematic liquid crystal material in which a dichroic or pleochroic dye (i.e.,

a dye whose light absorption spectrum is a function of the polarization of the incident light with respect to molecular orientation) is dissolved so as to switch from a high transmission condition to a low transmission condition brought about by absorption of the light by the dye. Such liquid crystal cells do not employ the polarizing effect of the "host" liquid crystal molecules to vary the transmission of light therethrough; rather, the transmission of light is only affected significantly by the absorption characteristics of the "guest" dye molecules. In the absence of an applied voltage the liquid crystal molecules tend to orient themselves more or less randomly, and the dye molecules tend to align themselves with the liquid crystal molecules. Under that condition substantial light is absorbed by the dye molecules. When a field is applied to the cell the host molecules align themselves with the field, causing the dye molecules to do likewise, thereby allowing substantially greater light to pass through the cell. The control of color in a cell of this type was disclosed in a paper by Heilmeier and Zanoni entitled "Guest-Host Interactions in Nematic Liquid Crystals. A New ElectroOptic Effect", 13 Applied Physics Letters 91 (August 1, 1968).

It is also known that in such a guest-host liquid crystal cell the liquid crystal molecules may be aligned to a predetermined orientation. Since the dye molecules align themselves with the host molecules, and since they have a distinct axis of light absorption, the dye molecules in such a cell also affect the polarization of light passing through the cell. When the axis of absorption is aligned perpendicular to the direction of propagation of light through the cell, the dye molecules not only absorb light, but because the light absorbed is primarily along that distinct axis, the emerging light is primarily polarized along an axis perpendicular to the axis of absorption. It has been disclosed that considerable contrast can be achieved with a reflective display employing such a guest-host cell and a quarter wave plate placed between the cell and the background reflective surface. In such a device not only is absorption achieved by alignment of the dye molecules with the electric field, but due to the polarization of the light, the quarter wave plate causes the light emerging from the cell, traveling through the quarter wave plate to the reflective surface, and back through the quarter wave plate, to be shifted 90 degrees, thereby causing the reflected light, which was out of alignment with the absorption axis of the molecules when it first passed through the cell, to be aligned with the absorption axis of the dye molecules when it passes back through the cell. A display of this type was disclosed in Cole and Kashnow, "A New Display Configuration for Dichroic Liquid Crystals", 8 SID Digest 96 (May, 1977).

While the effects described in the Heilmeier and Cole articles were limited to binary application of an applied voltage to switch the cells from a transmissive to an absorptive condition, and vice-versa, it would be desirable to have a variable contrast, glare-reducing filter, particularly for use with a CRT display device, whereby the transmission of light through the cell, as well as the polarization produced by a guest-host cell, could be varied continuously over a nearly linear range by the application of a voltage selected from a relatively wide range, and whereby the amount of light transmission has a repeatable relationship to the applied voltage.

## SUMMARY OF THE INVENTION

The present invention takes advantage of the aforementioned known characteristics of a guest-host liquid crystal cell, and applicant's discovery that the transmission of light through such a cell can be repeatably varied over a continuous range by the application of a selected voltage, to provide a voltage controlled variable contrast filter. It is particularly directed to the use of such a filter in connection with a CRT display.

In one embodiment, a nematic liquid crystal cell is provided wherein the liquid crystal molecules are linearly aligned, a dichroic dye is dissolved in the liquid crystal material, and a circuit is provided for applying to the electrodes of the cell a selected voltage from a continuous range of voltage. The effect is to provide a contrast filter whose light transmission characteristic is selectively variable within a predetermined continuous range. In application, the cell is placed in front of a CRT in order to control the observed intensity of light emitted from the display. By selecting the choice and concentration of dye in the cell, the midpoint of the range of transmission may be establishd for a particular application.

In a variation of the aforementioned embodiment the cell is followed by a quarter wave plate, which introduces birefringence that produces circular polarization. Hence, by varying the voltage across the cell, the relative amplitude of polarized light transmitted through the cell may be varied, which varies the relative amplitude of circularly polarized light. When placed in front of a CRT display, not only does the circular polarizer embodiment serve to vary the intensity of the display, but it serves to reduce glare. External light that is not initially absorbed by the cell is shifted 90 degrees by passing through the quarter wave plate, reflecting off the surface of the CRT, and passing back through the quarter wave plate, so that in reentering the cell its intensity is again reduced by absorption, its polarization now being primarily along the absorptive axis of the dye molecules.

In another embodiment two cells are used, the molecular alignment of one cell being different from the alignment of the other, preferably by 90 degrees. In such a cell the intensity of light transmitted therethrough is affected not only by the absorption of the dichroic dye in one cell, but by the absorption of light by the second cell, the maximum absorption due to polarization occurring when the alignments differ by 90 degrees. Even greater absorption can be achieved by adding further cells whose polarization is different from either of the first two cells. This embodiment provides greater contrast because, while the transmission in the unpolarized state changes very little by such stacking of cells, the transmission in the polarized state decreases significantly with the stacking of cells having different alignments.

Accordingly, it is a principal objective of the present invention to provide a novel variable contrast optical filter and application therefor.

It is another objective of the present invention to provide a variable contrast optical filter whose amount of light transmission can be varied repeatably over a continuous range of contrasts substantially proportional to an applied voltage.

It is another objective of the present invention to provide a variable contrast filter whose range of contrast is greater than heretofore available.

It is another objective of the present invention to provide a variable contrast filter in which the midpoint of the range of possible contrast may be selectively established for various applications.

It is a further objective of the present invention to provide a variable contrast filter that may also be used to vary the amount of circularly polarized light passing therethrough.

It is yet another objective of the present invention to provide a variable contrast filter and display device for varying the intensity of light emitted from a display device.

It is yet a further objective of the present invention to provide a variable contrast filter and display device for reducing the glare produced by light reflected from a display device.

The foregoing and other objectives, features, and advantages of the invention will be more readily understood upon consideration of the following detailed description of the invention, taken in conjunction with the accompanying drawings.

## BRIEF DESCRIPTION OF THE DRAWINGS

FIGS. 1(a)-(c) show schematic diagrams of the operation of a dichroic dye guest, nematic liquid crystal host cell at various applied voltages.

FIG. 2 shows a representative graph of light transmission as a function of applied voltage for a guest-host cell of the type illustrated by FIGS. 1(a)-(c).

FIG. 3 shows a side cross-section of a first embodiment of an optical filter according to the present invention, and a variation thereof.

FIG. 4 is a diagrammatic illustration of the effect on light of the embodiment of the invention shown in FIG. 3 with no voltage applied thereto.

FIG. 5 is a side cross-section of a second embodiment of an optical filter according to the present invention.

FIG. 6 is a diagrammatic illustration of the effect on light of the embodiment of the invention shown in FIG. 5 with no voltage applied thereto.

## DETAILED DESCRIPTION OF THE INVENTION

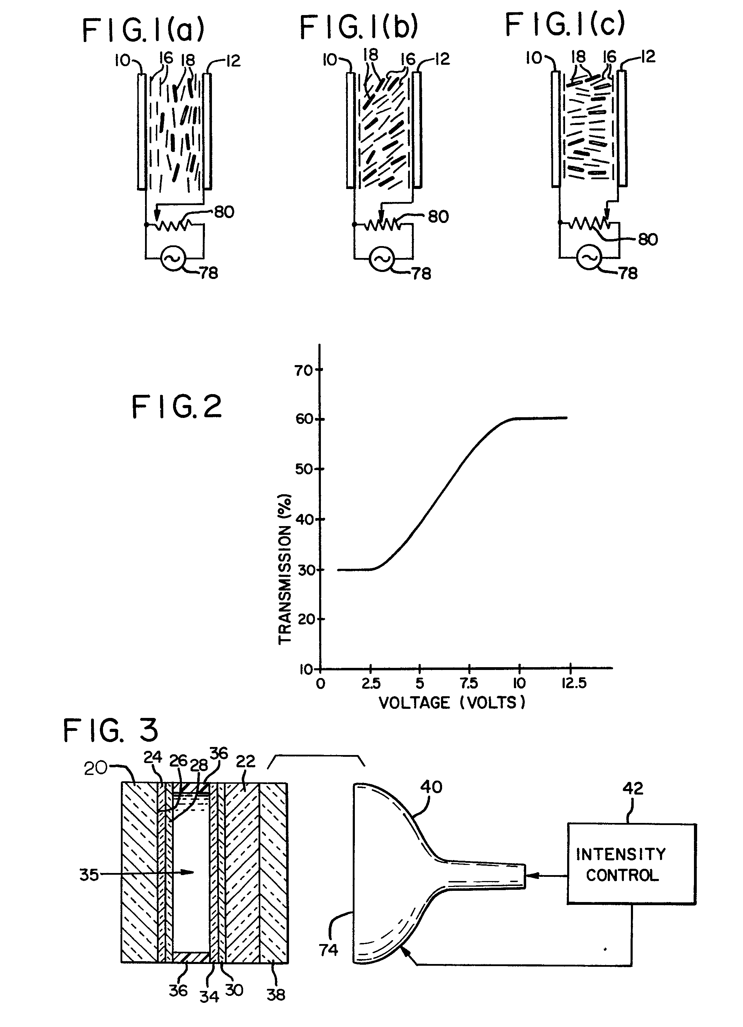

Referring to FIGS. 1(a)-(c), the basic liquid crystal cell of the type employed in the invention has one transparent plate 10 and another transparent plate 12, each plate having transparent electrode and alignment layers disposed on an interior face thereof, as described below with respect to FIG. 3. In addition, a host nematic liquid crystal material is disposed between the first and second plates. The alignment layers, which may be applied in any of several commonly known ways, one of which is described below, are oriented so that liquid crystal molecules 16 adjacent each plate align themselves in the same direction. Consequently, with no voltage applied to the cell, all of the liquid crystal molecules tend to align parallel to one another, and to the planes of the two plates 10 and 12, that is, they are linearly aligned. In fact, the molecules, which are elongate in shape, are in constant motion; but their directors, that is, the average direction of their elongate dimension, are substantially aligned in parallel with one another.

In a guest-host cell of the type employed in the present invention, molecules of a guest dichroic or pleochroic dye 18 are dissolved in the liquid crystal material. The dye molecules tend to be roughly cigar-shaped, and the dye is preferably chosen such that the directors of the guest dye molecules 18 align substantially parallel to the elongate axes of adjacent host liquid crystal molecules 16. Such dyes will typically have an axis of absorption, that is, an axis which, when parallel to the electric field of impinging light, will substantially absorb light polarized along that axis. It is important to the optimum operation of the present invention that the absorption axis of the molecules of dye employed be substantially colinear with the elongate geometric axis thereof.

As shown by FIG. 1(c) when an AC voltage of maximum amount is applied to the cell, as by voltage source 78 and potentiometer 80, the liquid crystal molecules 16 align themselves parallel to the electric field, that is, perpendicular to the surface of the plates. The dye molecules 18, being aligned with the quasi-crystaline structure of the liquid crystal molecules 16, also rotate so as to align themselves substantially perpendicular to the plates. In this condition little absorption occurs, as the absorption axis of the dye molecule is perpendicular to most of the impinging light. As shown by FIG. 1(b) the orientation of the liquid crystal and dye molecules changes variably with corresponding changes in the applied voltage. Hence, as shown in FIG. 2, the transmission of light through the cell varies over a continuous range in accordance with the applied voltage. Provided that a dye is chosen whose absorption axis is approximately colinear with the director of the dye molecule and whose director substantially follows in parallel ·the orientation of the directors of adjacent liquid crystal molecules, a change in contrast having a range on the order of a 30% change in light transmission nearly linearly proportional to a corresponding voltage change of about 7.5 volts can be achieved. The midpoint of the range of transmission can be selected by varying the type and concentration of guest dye in host liquid crystal, the midpoint being higher for a low concentration and vice-versa.

Similarly, since the dye molecules tend to absorb all light of one polarization, most light passing through the cell tends to be polarized in a direction 90 degrees to the direction of the axis of absorption. However, when all of the molecules are aligned perpendicular to the plates, the absorption is eliminated; hence the polarization is also essentially eliminated.

Turning now to FIG. 3, a first embodiment of a variable contrast cell according to the present invention comprises a first transparent plate 20 having substantially planar, parallel surfaces and a similar second transparent plate 22, the second plate being substantially parallel to, and spaced a substantially uniform predetermined distance from the first plate. Ordinarily the two plates would be made of glass, though other materials having similar properties may also be used. A transparent conductor 24 is disposed on the inner surface 26 of the first plate 20 so as to conform thereto. A suitable electrode is a thin film of indium-tin oxide (ITO) deposited in a conventional manner on the surface 26. A thin alignment layer 28 is disposed on top of the electrode so as to conform thereto. A suitable alignment layer may be produced in a conventional manner. For example, with the plate 20 oriented horizontally, a glob of polyimide material mixed with a solvent is placed centrally on the electrode and the plate is rotated about a vertical axis so that the material is spread out over the surface of the electrode. Thereafter, the alignment direction is established by rubbing the surface of the polyimide material with a cloth in the desired direction of alignment.

A second electrode 30 is similarly disposed on the inner surface 32 of plate 22, and a second alignment layer 34 is similarly formed on that electrode. The alignment layer 34 is formed so that its direction of alignment is the same as the direction of alignment of the layer 28. It is to be understood that other types of transparent electrodes and alignment layers might be utilized without departing from the principles of this invention. A liquid crystal composition 35 of a liquid crystal material containing a dichroic or pleochroic dye dissolved therein is placed between the respective alignment layers of the plates, and the plates are sealingly separated by suitable spacers 36 in a conventional manner.

It has been found that a suitable composition of liquid crystal material and dichroic dye is that material designated as ZLI 2622, produced by a company doing business as E. Merck of Darmstadt, West Germany. The distributor is a company doing business as E. M.

Chemicals of 5 Sylvan Avenue, Hawthorne, New York. The cell works best when the composition is diluted with the liquid crystal material itself, designated as ZLI 2452 by the same manufacturer, in a range of 1:1 to 10:1, liquid crystal material to composition.

In a modified version of this embodiment a flat quarter wave plate 38 is disposed adjacent the outer surface of plate 22, i.e., in back of the filter. In one application the resultant filter is placed in front of a CRT display device 40, having conventional drive circuitry, particularly an electron beam intensity control 42.

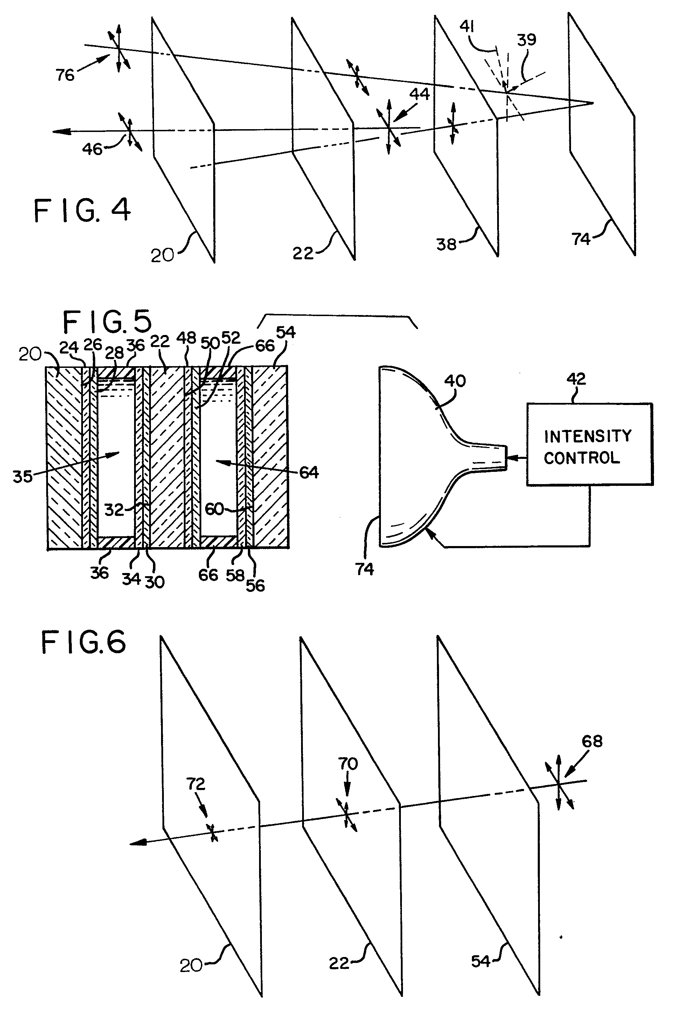

The effect of the filter is explained with respect to FIG. 4. Ignoring, initially, the quarter wave plate 38, unpolarized light 44, as from a spot on the face 74 of the CRT device 40, enters the filter through plate 22. Assuming that the minimum voltage is applied to the electrodes of the filter such that the dye molecules are in their most absorptive and most polarizing orientation, and assuming that the direction of alignment of the molecules is vertical, that portion of impinging light that is vertically polarized will be substantially absorbed by the dye molecules. As a result, the light 46 leaving the filter will have components whose amplitude in the direction of horizontal polarization is substantially unattenuated, whereas the components in the direction of horizontal polarization will be substantially attenuated, the components polarized at angles in between being increasingly attenuated as their angle with the horizontal decreases. The net light transmitted through the filter is considerably reduced and the dominant polarization of the light leaving the filter is horizontal. In contrast, when the maximum voltage is applied to the plate so that the dye molecules are aligned in the direction of propagation of the light, very little light of any polarization is absorbed for light impinging on the filter at right angles thereto, though light impinging at other than right angles would be absorbed to some extent, so that the transmission of the filter is considerably greater.

An adjustment circuit, such as the AC voltage source 78 and potentiometer 80 shown in FIGS. 1(a)-(c), is connected to the electrodes 24 and 30 of the filter so as to selectively apply voltage across those electrodes. The adjustment circuit permits the applied voltage to be continuously selectable from within a predetermined range so as to selectively vary the transmission of the filter over a corresponding continuous range.

Placement of the quarter wave plate 38 adjacent the side of plate 22 converts the variable contrast filter into a variable contrast circular polarizer. As is commonly known in the art, a quarter wave plate has a property known as birefringence; that is, the index of refraction of the material from which the quarter wave plate is made is different along different axes, usually referred to as the ordinary axis, 39, and extraordinary axis, 41. These axes are typi- cally 90 degrees apart from one another. By orienting these two axes such that they are each 45 degrees from the plane of principal polarization of impinging light, the phase of light emerging from the quarter wave plate is different along one axis than along the other, thereby causing the polarization of light leaving the quarter wave plate to rotate at some angular velocity that is a function of that phase difference; that is, the light becomes circularly polarized. By varying the voltage across the electrodes of the filter, the amount of polarized light emerging from the cell, hence the amount of circular polarizated light emerging from the quarter wave plate, can be varied.

With the quarter wave plate 38 placed between plate 22 and the face 74 of the CRT display device 40, unpolarized external light 76 traveling through the filter from the side of plate 20 is substantially attenuated in the vertical direction, but not in the horizontal direction, by the time it passes through plate 22. If it were simply reflected off the surface 74 of the CRT 40, either without a change in polarization or with a 180° change in polarization, the unattenuated portion would reemerge from the front of the filter as glare. However, the quarter wave plate causes it to be shifted 90 degrees in polarization from its emergence from plate 22 to its reemergence from the quarter wave plate 38 after having first passed through the quarter wave plate and been reflected off the surface 74. Hence, it will again experience attenuation in passing through the cells. In fact, most glare will be essentially extinguished before it can reemerge from the front side of the filter.

The foregoing assumes that no voltage is applied to the cell so that maximum polarization is achieved. In that condition, maximum reduction of the intensity of the display occurs as well. By selectively varying the voltage applied across the electrodes of the filter, the amount of circularly polarized light may be varied continuously over a predetermined range. When maximum voltage is applied to the cell minimum reduction in the intensity of the display occurs, but minimum reduction of glare also occurs. It can be appreciated that by the proper combination of contrast and CRT display intensity, glare can be minimized while the intensity of the display can be maximized.

A further embodiment of the invention is shown in FIG. 5. This embodiment is similar to the first embodiment, except that a third transparent electrode 48 is disposed on the other surface 50 of the plate 22, and a third transparent alignment layer 52 is disposed on the electrode 48. Moreover, a third transparent plate 54, similar to plates 10 and 22, is disposed substantially parallel to, and spaced a substantially uniform predetermined distance from, plate 22, the third plate also having a fourth transparent electrode 56 and a fourth alignment layer 58 disposed adjacent its inner surface 60. In this case, however, while the alignment layers 52 and 58 are oriented in the same direction, that direction is different from the direction of alignment of the layers 28 and 32, preferably 90 degrees therefrom. A liquid crystal and dye composition 64 is placed between the second and third plates, which are sealingly spaced from one another by spacers 66. In the absence of an applied voltage, the dye molecules of the composition 64 are aligned perpendicular to the molecules of the composition 35 between plates 20 and 22; hence, the polarization of the two stacked cells differs by 90 degrees. As in the case of the embodiment shown in FIG. 3, an adjustment circuit is provided to selectively apply a voltage across the respective electrodes of each cell. It is to be understood that the same or a different adjustment means may be provided for each cell. It is also to be understood that while this filter has been shown with only three plates, the filters produced by plates 20 and 22, on the one hand and plates 22 and 54, on the other, could be construced separately, plate 22 being replaced by two distinct plates.

In FIG. 6, light 68, as from a spot on the face 74 of CRT device 40, impinging on the filter so as to pass first through plate 54 is unpolarized. If the maximum allowable voltage were applied to both cells, light would pass through both cells with about the same, minimum attenuation in both cells. However, assuming that no voltage is applied to the first cell formed by plates 54 and 22 and that the alignment of the nematic liquid crystal molecules in that cell is vertical, light 70 that is passed through that cell will be substantially attenuated in the vertical direction, and substantially unattenuated in the horizontal direction; that is, it will be primarily horizontally

-15-

polarized. Assuming that the nematic liquid crystal molecules in the cell formed by plates 20 and 22 are aligned in the horizontal direction and that no voltage is applied to that cell, the horizontally polarized light 70 will be attenuated as it passes through that cell so that what little light 72 emerges from the filter is substantially attenuated from the intensity of light 68. It has been discovered that the range of contrast that can be obtained by such a stacked-cell filter is significantly greater, about 8% - 10% greater, than the range of a single-cell filter.

Automatic control could be added to any of the filters herein to measure light level and adjust the contrast level in accordance with predetermined factors such as the ambient light level. Transmission of the filter can be adjusted in combination with the brightness of the display source to fit any circumstance. The separate cells of the embodiment of FIG. 5 might also be adjusted separately to accommodate certain circumstances.

The cells could be divided into multiple sections, or multiple cells, having separate liquid crystal and dye compositions for different display functions. Such sections could have various densities and colors. Moreover, while the exemplary composition of liquid crystal material and dye provides a contrast filter of neutral tone, different dyes can be used to produce various colored filters.

The terms and expressions which have been employed in the foregoing specification are used therein as terms of description and not of limitation, and that is no intention of the use of such terms and expressions of excluding equivalents of the features shown and described or portions thereof, it being recognized that the scope of the invention is defined and limited only by the claims which follow.

CLAIMS

1.  A variable contrast optical filter, comprising:

(a)  a first substantially planar transparent electrode having a first transparent alignment means disposed on one side thereof for alignment of adjacent molecules of nematic liquid crystal material in a first predetermined direction;

(b)  a second substantially planar transparent electrode disposed parallel to and a predetermined, uniform distance from said first electrode to the side thereof on which said first alignment means is disposed, said second electrode having second transparent alignment means disposed on the side thereof closest to said first electrode for alignment of molecules of an adjacent nematic liquid crystal material in said first predetermined direction;

(c)  a third substantially planar transparent electrode disposed substantially parallel to and a predetermined, uniform distance from said second electrode to the side thereof opposite the side on which said second alignment means is disposed, said third electrode having third transparent alignment means disposed on the side thereof opposite said second electrode for alignment of molecules of adjacent nematic liquid crystal material in a second predetermined direction;

(d)   a fourth substantially planar transparent electrode disposed substantially
parallel to and a predetermined, uniform
distance from said third electrode to
the side thereof on which said third
alignment means is disposed, said fourth
electrode having fourth transparent
alignment means disposed on the side
thereof closest to said third electrode
for alignment of molecules of a nematic
liquid crystal material in said second
predetermined direction, said second
predetermined direction being different
from said first predetermined direction;

(e)   first nematic liquid crystal material
disposed between said first alignment
means and said second alignment means,
said first liquid crystal material
having dissolved therein dye molecules
whose light absorption is a
function of the polarization of incident
light with respect to their molecular
orientation; and

(f)   a second nematic liquid crystal material
disposed between said third alignment
means and said fourth alignment means,
said second liquid crystal material
having dissolved therein dye molecules
whose light absorption is a
function of the polarization of incident
light with respect to their molecular
orientation.

2.   The filter of claim 1 wherein said first
electrode is disposed on one face of a first
transparent plate, said second electrode is disposed on
one face of a second transparent plate, said third

electrode is disposed on the opposite face of said second plate, and said fourth electrode is disposed on one face of a third transparent plate, said first and second electrodes being disposed between said first and second plates, and said third and fourth electrodes being disposed between said second and third plates.

3. The filter of claim 1, further comprising adjustment means for applying a first selected voltage across said first and second electrodes, and a second selected voltage across said third and fourth electrodes, respectively, said voltages being substantially continuously selectable from within respective predetermined ranges.

4. The filter of claim 1, further comprising a cathode ray tube display device, said display device being disposed substantially parallel to and a predetermined distance from the said fourth electrode on the side thereof opposite said third electrode.

5. The filter of claim 4 wherein said cathode ray tube display device includes intensity control means for controlling the intensity of the display produced by said display device.

6. The filter of claim 1 wherein the optical absorption characteristics of said dye dissolved in said first liquid crystal material are different from the optical absorption characteristics of said dye dissolved in said second liquid crystal material.

7. The filter of claim 1, further comprising a third liquid crystal material having dissolved therein dye molecules whose light absorption is a function of the polarization of incident light with respect to their molecular orientation, said third liquid crystal material being disposed in a portion of the space between either of said first and second alignment means or said third and fourth alignment means and separated from the other liquid crystal material disposed between said respective alignment means.

8.    A variable contrast optical filter, comprising:

(a)    a first transparent plate having a first transparent electrode disposed on one surface thereof and a first transparent alignment means disposed on said first transparent electrode for alignment of molecules of nematic liquid crystal material in a predetermined alignment direction preferably over substantially the whole area of the first plate;

.(b)    a second transparent plate disposed substantially parallel to and a predetermined, uniform distance from said first plate, said second plate having a second transparent electrode disposed on a surface thereof facing said first plate and second transparent alignment means disposed on said second electrode for alignment of molecules of nematic liquid crystal material in said predetermined alignment direction preferably over substantially the whole area of the second plate;

(c)    nematic liquid crystal material disposed between said first alignment means and said second alignment means, said liquid crystal material having dissolved therein dye molecules whose light absorption is a function of the polarization of incident light with respect to their molecular orientation; and

(d) adjustment means for applying a selected voltage across said first and second transparent electrodes, said voltage being selectable,preferably substantially continuously,from within a predetermined range.

9. The filter of claim 10 further comprising a quarter wave plate disposed substantially parallel to, and a uniform distance from, said second plate on a side thereof opposite said second electrode, the ordinary and extraordinary axes of said quarter wave plate being oriented at substantially 45 degrees to said alignment direction.

10. The filter of claim 8, further comprising a cathode ray tube display device, said display device being disposed substantially parallel to and a predetermined distance from said second plate on the side thereof opposite said second electrode.

11. The filter of claim 10 wherein said cathode ray tube display device includes intensity control means for controlling the intensity of the display produced by said display device.

12. The filter of claim 8, further comprising a second liquid crystal material, having dissolved therein dye molecules whose light absorption is a function of the polarization of incident light with respect to their molecular orientation, said second liquid crystal material being disposed in a portion of the space between said first and second alignment means distinct from the portion in which said first liquid crystal is disposed.

13. A method for controlling the intensity of light emitted from a display device, said method comprising the steps of:

(a) placing in front of said display device at least one optical filter comprising a first transparent plate having a first transparent electrode disposed on one surface thereof and first transparent alignment means disposed on said first transparent electrode for alignment of molecules of nematic liquid crystal material in a predetermined alignment direction, a second transparent plate disposed substantially parallel to and a predetermined, uniform distance from said first plate, said second plate having a second transparent electrode disposed on a surface thereof facing said first plate and second transparent alignment means disposed on said second electrode for alignment of molecules of nematic liquid crystal material in said predetermined alignment direction, and nematic liquid crystal material disposed between said first alignment means and said second alignment means, said liquid crystal material having dissolved therein dye molecules whose light absorption is a function of the polarization of incident light with respect to their molecular orientation; and

(b) selectively applying across said first and second electrodes a voltage from within a predetermined range.

14. The method of claim 13, further comprising placing a second optical filter of the type described in step (a) in front of said display device and substantially parallel to the filter described in step (a), said second filter being oriented so that its alignment direction is different from the alignment direction of the filter described in step (a), and selectively applying to the first and second electrodes of said second filter a voltage from within a predetermined range.

15. The method of claim 13, further comprising placing a quarter wave plate between, and substantially parallel to, the filter described in step (a) and said display device, the ordinary and extraordinary axes of said quarter wave plate being disposed at 45 degrees from said alignment direction.

16. The method of claim 13, further comprising adjusting both the intensity of light produced by said display device and the voltage applied to said at least one optical filter to optimize the observed display.

17. The method of claim 13, further comprising measuring the level of ambient light intensity and adjusting the voltage applied to said at least one optical filter based thereon.

18. The method of claim 13 wherein the steps are performed with respect to a cathode ray tube display device.

0182639

1/2

FIG.I(a)   FIG.I(b)   FIG.I(c)

FIG.2

FIG. 3

FIG. 4

FIG.5

INTENSITY CONTROL

FIG.6